Europäisches Patentamt

**European Patent Office**

Office européen des brevets

(19)

(11) Numéro de publication : **0 020 238
B1**

(12) **FASCICULE DE BREVET EUROPÉEN**

(45) Date de publication du fascicule du brevet :
05.10.83

(51) Int. Cl.³ : **G 01 N 21/41**, G 01 N 21/59,
G 01 N 25/00

(21) Numéro de dépôt : **80400703.7**

(22) Date de dépôt : **20.05.80**

(54) **Procédé et dispositif de mesure des transferts thermiques d'un échantillon et application à la mesure du coefficient d'absorption.**

(30) Priorité : **22.05.79 FR 7912985**

(43) Date de publication de la demande :
**10.12.80 Bulletin 80/25**

(45) Mention de la délivrance du brevet :
**05.10.83 Bulletin 83/40**

(84) Etats contractants désignés :
**AT BE CH DE FR GB IT LI LU NL SE**

(73) Titulaire : **ANVAR Agence Nationale de Valorisation de la Recherche
13, rue Madeleine Michelis
F-92522 Neuilly-sur-Seine (FR)**

(72) Inventeur : **Badoz, Jacques
11, rue Monticelli
F-75014 Paris (FR)**
Inventeur : **Boccara, Albert
8, rue Marcel Dubois
F-75012 Paris (FR)**
Inventeur : **Fournier, Danièle, Juillard
18 rue de la Procession
F-75015 Paris (FR)**

(74) Mandataire : **Fort, Jacques et al
CABINET PLASSERAUD 84, rue d'Amsterdam
F-75009 Paris (FR)**

(56) Documents cités :
APPLIED OPTICS, vol. 16, no 11, novembre 1977, pages 2827-2833 New York, U.S.A. A. HORDVIK : « Measurement techniques for small absorption coefficients : recent advances »

APPLIED OPTICS, vol. 15, no 11, novembre 1976, pages 2658-2663 New York, U.S.A. J.F. McCLELLAND et al. : « Photoacoustic spectroscopy with condensed samples »

APPLIED OPTICS, vol. 12, no 1, janvier 1973, pages 72-79 New York, U.S. A.C. HU et al. : « New thermooptical measurement method and a comparison with other methods »

(56) Documents cités :
REVIEW OF SCIENTIFIC INSTRUMENTS, vol. 48, no 9, septembre 1977, pages 1133-1137 New York, U.S.A. A. ROSENCWAIG : « Photo-acoustic spectroscopy of solids »

JOURNAL OF PHYSICS E : SCIENTIFIC INSTRUMENTS, vol. 6, no 1, janvier 1973, pages 40-42 London, G.B. T. SAKAKIBARA et al. : « Instantaneous measurement of spatial temperature distribution through light beams deflection method »

ANALYTICAL CHEMISTRY, vol. 51, no 6, mai 1979, pages 728-731 Washington, D.C., U.S.A. N.J. DOVICHI et al. : « Laser induced thermal lens effect for calorimetric trace analysis »

INSTRUMENTS AND EXPERIMENTAL TECH-
NICS, vol. 22, no 2, mars-avril 1979, pages 280-
282 Ed. Plenum Press New York, U.S.A. V.A.
BAZHINOV et al. : « A laser microrefractometer
for measuring temperature gradients in a liquid »

Procédé et dispositif de mesure des transferts thermiques d'un échantillon et application à la mesure du coefficient d'absorption

L'invention a pour objet un procédé et un dispositif de mesure des transferts thermiques d'une quantité de chaleur entre un échantillon de corps en phase condensée et un gaz ambiant c'est-à-dire de la quantité de chaleur transmise, notamment en vue de l'analyse de ces corps, et elle trouve une application particulièrement importante dans la mesure du coefficient d'absorption d'énergie lumineuse par l'échantillon.

Depuis plusieurs années, on assiste à un développement important des techniques spectroscopiques utilisant la conversion en chaleur de l'énergie lumineuse envoyée sur l'échantillon et les transferts de chaleur entre une face de l'échantillon et un gaz avec lequel cette face est en contact. En effet, ces techniques sont applicables dans des cas où la spectroscopie d'absorption traditionnelle ne convient pas, notamment dans le cas de corps très absorbants, diffusants, solides ou semi-solides.

Parmi les techniques connues de ce genre, on peut notamment citer la spectroscopie photo-acoustique (Voir par exemple « Applied Optics », Volume 15, No. 11, novembre 1976, « Photo-acoustic spectroscopy with condensed samples », pp. 2658-2663 par J.F. McLelland et al.) : on irradie l'échantillon placé dans un gaz à l'aide d'un flux lumineux d'excitation monochromatique modulé en amplitude et on détecte les transferts thermiques entre la surface recevant le flux et le gaz ambiant. La spectroscopie photo-acoustique utilise la conversion d'énergie thermique en énergie acoustique. Une sonde (par exemple un microphone) placée à proximité de l'échantillon, fournit des signaux électriques à la fréquence de modulation.

La spectroscopie photo-acoustique présente un certain nombre d'inconvénients : en particulier, le système de mesure est très sensible aux vibrations mécaniques ; il exige l'emploi d'une cellule de mesure à fenêtres épaisses qui ont un effet défavorable sur la précision des mesures ; la taille des échantillons est évidemment limitée à celle de la cellule, généralement de petite taille (typiquement $3 \times 3 \times 8$ mm³). Enfin, la sonde et les parois de la cellule subissent des effets parasites.

On sait par ailleurs détecter les transferts thermiques d'un échantillon avec le milieu ambiant en mesurant le déplacement angulaire d'un pinceau lumineux dirigé à angle droit de l'axe de symétrie de l'échantillon (« Instruments and experimental technics, Vol. 22, No. 2, Mars, Avril 1979, pp. 280-282, V.V. Bazhinov et al.) ou tangentiellement aux isothermes du champ de température à symétrie axiale produit par un arc électrique constituant l'échantillon (Journal of Physics E : Scientific Instruments, Vol. 6, No. 1, janvier 1973, pp. 40-42). Dans le premier cas, l'échantillon est chauffé galvaniquement et il est placé dans une cuvette remplie d'eau distillée.

La présente invention vise à fournir un procédé et un dispositif de mesure des transferts thermiques entre un échantillon et un gaz, répondant mieux que ceux antérieurement connus aux exigences de la pratique. Plus précisément, l'invention vise à fournir un procédé et un dispositif moins sensibles aux perturbations extérieures que les techniques de spectroscopie photo-acoustiques et permettant d'atteindre un rapport signal/bruit au moins égal sans imposer une limitation excessive à la taille des échantillons. Elle vise également à appliquer à la mesure de transferts thermiques entre un échantillon de corps en phase condensée et un gaz ambiant, une technique optique du genre décrit dans les autres documents mentionnés plus haut, et permettant des applications hors d'atteinte des techniques définies par les solutions antérieures.

Dans ce but, l'invention propose notamment un procédé de mesure des transferts thermiques d'une quantité de chaleur entre un échantillon du corps en phase condensée et un fluide ambiant, dans lequel on détecte les transferts thermiques par mesure du déplacement angulaire d'un pinceau qui traverse une zone située à proximité de la surface de l'échantillon qui est soumis à une excitation thermique variable dans le temps, ledit pinceau lumineux étant dirigé parallèlement à une partie sensiblement rectiligne de la surface de l'échantillon et ledit fluide étant un gaz.

Une application importante de l'invention est constituée par la détermination du coefficient d'absorption thermique de l'échantillon. Dans ce cas, on irradie l'échantillon placé dans un gaz par un flux lumineux d'excitation dont l'amplitude varie dans le temps, avantageusement de façon périodique.

Dans tous les cas, le pinceau lumineux doit évidemment traverser une zone où règne un gradient d'indice appréciable, donc très proche de la surface.

Un dispositif de mesure des transferts thermiques suivant un autre aspect de l'invention comprend un support d'échantillon, des moyens pour diriger un pinceau de lumière parallèlement à une surface rectiligne de l'échantillon et à proximité immédiate de ladite surface et des moyens pour détecter l'amplitude du déplacement angulaire du pinceau de lumière.

Le faisceau lumineux d'excitation est avantageusement rendu monochromatique. En faisant varier la longueur d'onde du flux lumineux, on obtiendra une courbe de variation de la déviation en fonction de la longueur d'onde, caractéristique du matériau. Mais on peut aussi coder le flux lumineux d'excitation, par exemple à l'aide d'un interféromètre à transformée de Fourier ou à modulation sélective.

L'invention sera mieux comprise à la lecture de la description qui suit de dispositifs qui en constituent des modes particuliers de réalisation, donnés à titre d'exemples non limitatifs, et du procédé qu'ils mettent en œuvre. La description se

réfère aux dessins qui l'accompagnent, dans lesquels :

— la figure 1 est un schéma de principe montrant la variation de l'amplitude de la composante alternative de la variation de température au droit d'une surface qui reçoit un flux lumineux modulé ;

— la figure 2 est un schéma de principe d'un appareil constituant un premier mode de réalisation de l'invention ;

— la figure 3 montre la courbe représentative du flux transmis par l'étalon Fabry-Perot du dispositif de la figure 2 ;

— la figure 4 est un schéma de principe montrant un détail d'un dispositif constituant une variante de celui de la figure 2 ;

— la figure 5 montre, à titre d'exemple, les spectres obtenus avec trois matériaux distincts ;

— les figures 6 et 7 sont des schémas montrant deux variantes de réalisation.

Avant de décrire un dispositif suivant l'invention, on exposera tout d'abord les phénomènes physiques mis en œuvre par l'invention et qui s'apparentent à l'effet de mirage.

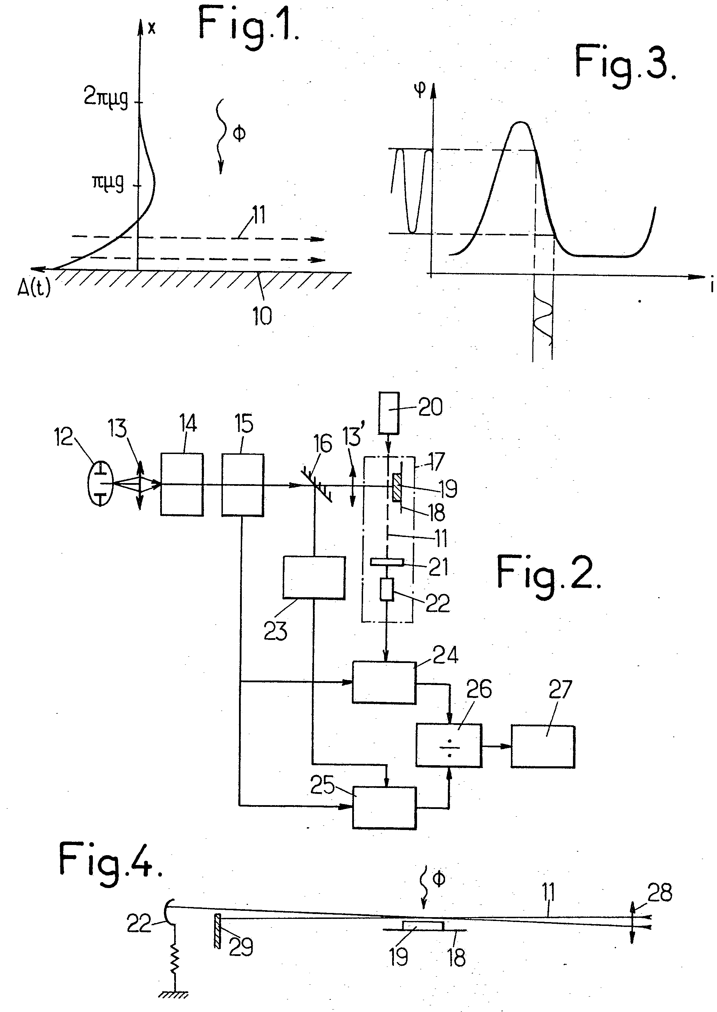

Lorsqu'on irradie la surface plane 10 d'un échantillon par un flux lumineux modulé $\Phi$, cette surface s'échauffe périodiquement, du moins si le processus de désexcitation est principalement non radiatif, ce qu'on supposera par la suite. L'élévation de température en surface est liée directement au coefficient d'absorption de l'échantillon et le gaz d'échange (l'air en général) en contact avec la surface 10 voit sa température se modifier de façon périodique dans une zone d'épaisseur finie. La variation de l'amplitude de la composante alternative A(t) en fonction de la distance x à la surface 10, présente l'allure montrée schématiquement en figure 1. La courbe peut être caractérisée par la longueur de diffusion thermique

$$\mu g = \sqrt{2k/\omega\rho C_p}$$

Dans cette formule, les paramètres ont le sens suivant :

k conductivité thermique
$C_p$ chaleur spécifique
$\rho$ densité
$\omega = 2\pi f$ (f : fréquence de modulation du flux $\Phi$).

Pour l'air, à une fréquence de 100 Hz, la longueur de diffusion thermique $\mu g$ est de l'ordre du millimètre.

On voit qu'un gradient de température dT/dx apparaît à proximité de la surface 10 et se traduit par un gradient d'indice dn/dx.

Suivant l'invention, on fait traverser cette zone par un pinceau lumineux d'axe 11, indiqué en tirets sur la figure 1. Le gradient thermique provoque un déplacement angulaire périodique de l'axe du faisceau : l'amplitude du gradient thermique étant proportionnelle à l'échauffement de la surface, l'amplitude du déplacement angulaire fournit une mesure de la composante périodique de la température à la surface de l'échantillon.

La figure 2 montre un dispositif constituant un mode particulier de mise en œuvre de l'invention.

Ce dispositif comporte une source de lumière 12, par exemple une lampe xénon. Une optique 13, schématisée par une simple lentille, reçoit la lumière provenant de la lampe 12 et focalise le faisceau émis par la fente d'entrée d'un monochromateur 14 de type classique, fournissant un faisceau de lumière situé tout entier dans une bande de fréquence étroite, mais ajustable par commande du monochromateur. Un modulateur 15, qui peut dans la plupart des cas être constitué par un simple hacheur, module le faisceau de lumière à la fréquence déterminée f. Une optique 13' focalise le faisceau sur l'échantillon 19.

Le dispositif montré en figure 2 effectue des mesures relatives par rapport à une substance étalon. Dans ce but, il comporte, à la sortie du modulateur 15, un séparateur de faisceau 16, constitué par exemple par un simple miroir semi-réfléchissant.

La partie transmise du faisceau arrive à la cellule de mesure 17 dans laquelle est prévu un support 18 pour recevoir un échantillon 19. L'invention s'applique à tout échantillon de corps en phase condensée (solide, liquide, gel, poudre, cristaux, etc.) et on notera que, l'effet utilisé pour la détection étant indépendant de l'état de surface, le domaine d'applications est très large. Sur la figure 2, le support 18 est vertical. Dans certains cas, il sera au contraire indispensable de le placer horizontalement, pour retenir un échantillon liquide par exemple.

Le pinceau de lumière 11 dont on mesure la déviation est émis par une source de faible puissance fournissant un rayonnement monochromatique, par exemple un laser hélium-néon 20. Une puissance de 1 mW sera généralement satisfaisante. Le pinceau 11 longe la surface irradiée de l'échantillon 19 puis traverse un organe qui modifie l'intensité du faisceau dans un rapport qui dépend de l'incidence i du faisceau. Cet organe 21 est par exemple un étalon Fabry-Perot qui est placé, non pas perpendiculairement au pinceau sortant de la source 20, mais avec une obliquité choisie de façon que la loi de réponse soit sensiblement linéaire. On a montré sur la figure 3 la variation du flux transmis $\varphi$ en fonction de l'incidence i et la zone de travail choisie.

La zone de travail, indiquée en trait épais, doit couvrir la divergence angulaire du laser, de l'ordre de milli-radian.

Le flux $\varphi$ qui a traversé l'étalon 21 est recueilli par un capteur, qui peut notamment être une diode PIN 22.

Le faisceau réfléchi par le séparateur 16 est de son côté reçu par une cellule de mesure 23 similaire à la cellule 17, mais dont l'échantillon est constitué par un matériau de caractéristiques bien définies, proche d'un corps noir. On peut notamment utiliser du noir de carbone ou du noir d'or.

Le signal de sortie provenant du capteur 22 est appliqué, éventuellement après amplification, à un démodulateur synchrone 24 qui fournit, sur sa sortie, un signal continu représentatif de l'absorption de lumière par l'échantillon 19 pour la longueur d'onde λ du faisceau d'intensité Φ. Le signal de référence de démodulation peut provenir du modulateur 15. De façon similaire, le signal de sortie provenant du capteur de la cellule étalon 23 est appliqué à un démodulateur synchrone 25, éventuellement après amplification. Les signaux provenant des démodulateurs 24 et 25 sont appliqués à un circuit diviseur analogique 26 dont la sortie attaque un enregistreur 27. Le traitement peut naturellement s'effectuer aussi bien en numérique.

Le dispositif montré en figure 2 a permis de mesurer des amplitudes de déviation du pinceau 11 de $10^{-9}$ radian, en opérant à des fréquences de modulation de quelques dizaines d'Hertz. Si on augmente encore la fréquence f de modulation, la longueur de diffusion thermique μg diminue, puisqu'elle est fonction de $\omega^{-1/2}$. Il peut alors être nécessaire de focaliser le pinceau de lumière pour que son épaisseur soit suffisamment faible au droit de l'échantillon. La figure 4 (où les organes correspondant à ceux de la figure 2 portent le même numéro de référence) montre une disposition qui peut alors être utilisée. La divergence du faisceau 11, donnée par une lentille 28, est alors telle qu'il n'y a pas d'inconvénient à détecter l'angle de rotation du faisceau à distance finie, et non pas sur un faisceau cylindrique comme dans le cas de la figure 2. Sur le trajet du faisceau 11 est placée une lame 29 formant diaphragme (lame de rasoir par exemple) qui remplace l'étalon 21 de la figure 2. Le capteur 22 peut être placé immédiatement derrière. La perte de sensibilité due à l'augmentation de la divergence du faisceau est plus que compensée du fait que le faisceau 11 traverse tout entier une zone proche de la surface de l'échantillon 19, zone où le gradient est maximum.

Le calcul montre que, si le plus petit angle de déviation détectable est de l'ordre de $10^{-9}$ radians, on peut mettre en évidence des gradients de température dT/dx aussi petits que $0,2 \cdot 10^{-3}$ degré/mm en utilisant comme gaz de l'air pour lequel l'indice est sensiblement égal à 1 et dn/dt est de l'ordre de $10^{-6}$.

Le rapport signal/bruit obtenu est de l'ordre de $5 \cdot 10^{+3}$ dans le cas d'un échantillon de noir de carbone pour un flux modulé d'environ 10 mW à la sortie du monochromateur, c'est-à-dire du même ordre de grandeur que dans le cas de la spectroscopie photo-acoustique.

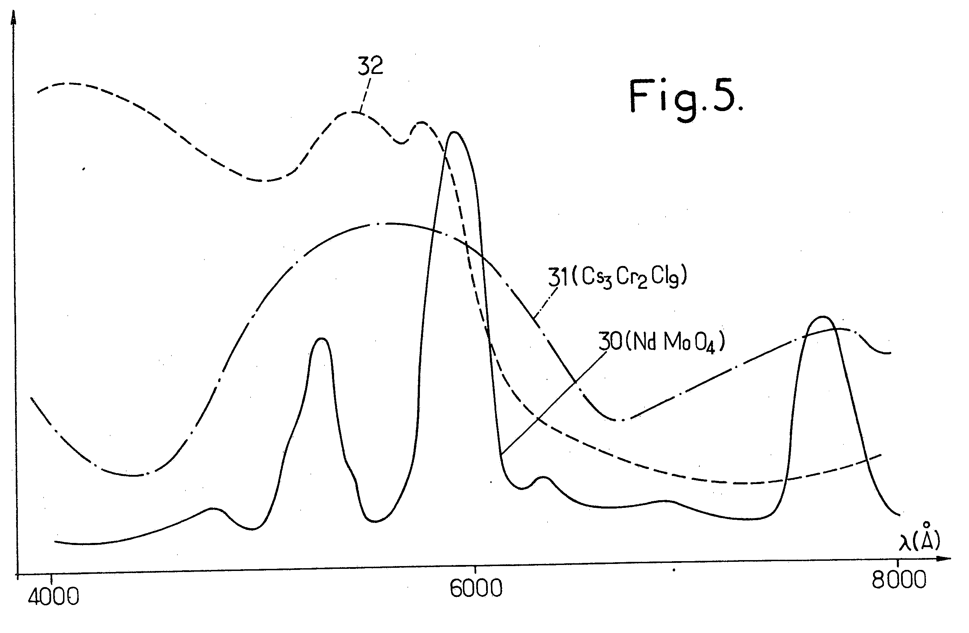

A titre d'exemple, la figure 5 montre des spectres obtenus à partir d'échantillons en phases diverses. La courbe 30 correspond à un cristal de $Nd\ Mo\ O_4$, la courbe 31 à de la poudre de $Cs_3\ Cr_2\ Cl_9$ et la courbe 32 à un échantillon de sang frais.

Le dispositif suivant l'invention est susceptible de nombreuses variantes de réalisation et de nombreuses adjonctions, en particulier pour améliorer le rapport signal/bruit en diminuant le bruit propre du laser utilisé comme sonde lumineuse. En particulier, alors que dans le mode de réalisation décrit le flux lumineux d'excitation est monochromatique, il est également possible d'exciter l'échantillon par un flux polychromatique codé, tel que ceux produits par un spectromètre à transformée de Fourier ou par un spectromètre à modulation sélective. La détection des transferts thermiques sera alors effectuée comme indiqué plus haut et le résultat de cette mesure pourra être traité de manière connue, selon le type de codage choisi, pour obtenir la contribution de chaque longueur d'onde aux transferts thermiques détectés.

De même, le procédé et le dispositif objet de l'invention permettent de mesurer les transferts thermiques engendrés par des impulsions lumineuses et non plus par une lumière dont l'amplitude est modulée suivant une loi approximativement sinusoïdale. Enfin, la détection du déplacement angulaire du faisceau peut être faite par tout moyen approprié. Il existe actuellement des détecteurs permettant de mesurer avec une grande précision la position d'une tache lumineuse. A titre d'exemple, on peut citer les barrettes de photodiodes. De tels détecteurs placés dans le plan image d'un système optique permettent de mesurer le déplacement angulaire du flux reçu par ce système et peuvent ainsi être avantageusement utilisés pour la mise en œuvre de l'invention.

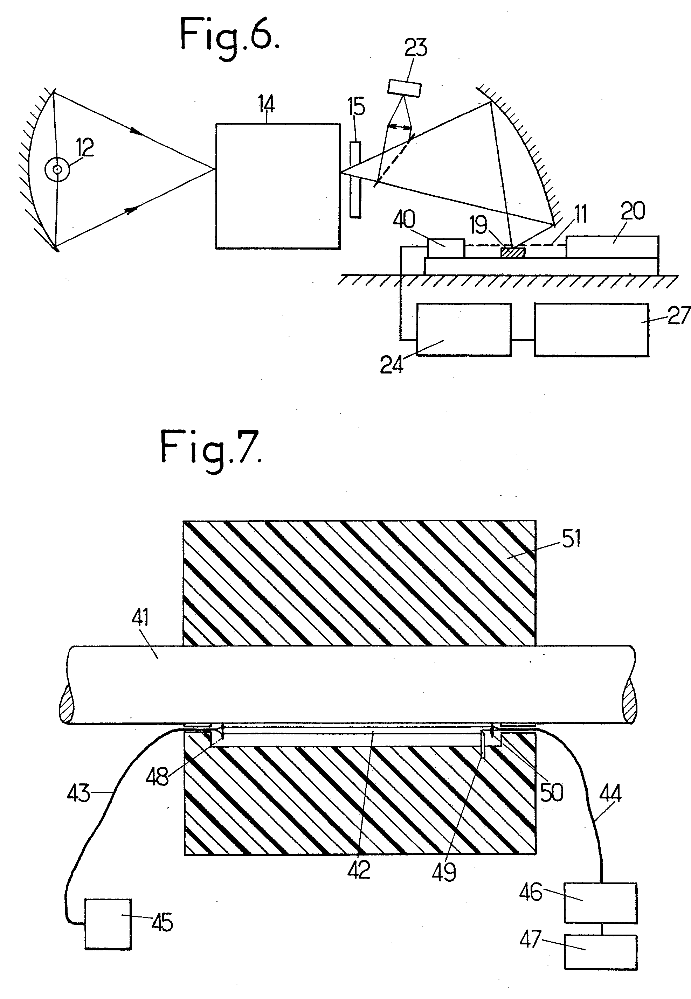

La figure 6, où les organes correspondant à ceux montrés en figure 2 sont désignés par le même numéro de référence, montre une variante du dispositif qui ne comporte pas de cellule de mesure de référence et permet encore de mesurer le spectre d'absorption (c'est-à-dire la variation du coefficient d'absorption en fonction de la longueur d'onde du rayonnement absorbé) de l'échantillon 19, dans la plage allant de 2 000 Å à 2 800 Å environ. Le flux lumineux d'une source 12, constituée par un arc au xénon de 450 W, traverse un monochromateur réglable 14 ouvert à f/2. Après modulation par un disque tournant 15, il est focalisé par un miroir elliptique sur l'échantillon. Le faisceau monochromatique 11 d'un laser He-Ne 20 de 1 mW est focalisé dans la zone de gradient thermique et la déflexion périodique du faisceau 11 est mesurée à l'aide d'un détecteur 40 qui peut avoir l'une des constitutions décrites ci-dessus, une cellule photoélectrique ou une cellule à deux quadrants du type commercialisé par Silicon Detector Corporation.

Si on estime nécessaire d'effectuer des mesures différentielles pour s'affranchir des instabilités de la source, il suffit d'ajouter au montage une lame semi-transparente de renvoi d'une fraction du faisceau de l'arc vers un détecteur 23 constitué par exemple par une cellule photoacoustique ou un détecteur pyroélectrique.

On a constaté que le signal équivalent au bruit d'un tel montage est très faible et correspond à des élévations de température d'environ $10^{-4}$ °C à la surface de l'échantillon.

Il faut encore remarquer que la stabilité en position du pinceau 11 n'est pas critique : une variation de l'ordre du 1/10 de la position du faisceau par rapport à la surface est en général parfaitement tolérable, ce qui rend le procédé utilisable hors du laboratoire.

Le procédé est également utilisable pour déterminer l'échauffement périodique d'un solide ayant une autre origine qu'une irradiation, par exemple un dégagement interne. La figure 7 montre à titre d'exemple un dispositif de mesure de l'intensité du courant alternatif dans un conducteur à haute tension 41. Le pinceau lumineux 42 de mesure du gradient thermique est alors dirigé parallèlement au câble sur un tronçon rectiligne de celui-ci. Pour écarter du câble les organes parcourus par des signaux électriques, le dispositif comporte des fibres optiques 43 et 44 d'amenée de lumière depuis la source 45 (laser He-Ne par exemple) et de retour de lumière au détecteur 46 associé à un enregistreur 47. Une optique 48 placée à la sortie de la fibre 43 forme le pinceau de lumière 42. Une lame 49 placée de façon à intercepter la moitié du pinceau non dévié et une optique 50 permettent d'envoyer au détecteur 46 un flux fonction de la déviation.

L'ensemble des éléments du dispositif dont la position doit rester invariable par rapport au câble 41 peuvent être logés dans un manchon isolant 51 de protection contre les agents atmosphériques.

Dans la pratique, on peut utiliser une zone d'interaction du pinceau de l'ordre de 10 cm. L'intensité qui parcourt le câble 41 peut être déduite de la déviation soit par étalonnage, soit par calcul des pertes dans le câble.

Un dispositif similaire peut être réalisé chaque fois que l'on souhaite déterminer la composante périodique d'une dissipation thermique au sein d'un échantillon.

## Revendications

1. Procédé de mesure des transferts thermiques d'une quantité de chaleur entre un échantillon de corps en phase condensée et un fluide ambiant, dans lequel on détecte les transferts thermiques par mesure du déplacement angulaire d'un pinceau lumineux qui traverse une zone située à proximité de la surface de l'échantillon qui est soumis à une excitation thermique variable dans le temps, caractérisé en ce que ledit pinceau lumineux est dirigé parallèlement à une partie sensiblement rectiligne de la surface de l'échantillon, et en ce que ledit fluide est un gaz.

2. Dispositif de mise en œuvre du procédé de mesure des transferts thermiques entre un échantillon de corps en phase condensée et un gaz ambiant selon la revendication 1, comprenant des moyens soumettant l'échantillon à une excitation thermique variable dans le temps, caractérisé en ce qu'il comprend un support d'échantillon (18), des moyens pour diriger un pinceau de lumière (11) parallèlement à une surface rectiligne de l'échantillon et à proximité immédiate de ladite surface et des moyens (21, 22) pour détecter l'amplitude du déplacement angulaire du pinceau de lumière.

3. Dispositif suivant la revendication 2 de mesure du coefficient d'absorption de lumière de l'échantillon, caractérisé en ce qu'il comprend des moyens (12-15) pour former un flux lumineux d'excitation variable dans le temps et dirigé vers la surface de l'échantillon pour y produire ladite excitation thermique.

4. Dispositif suivant la revendication 3, caractérisé en ce qu'il comporte des moyens pour rendre monochromatique le flux lumineux d'excitation thermique.

5. Dispositif suivant la revendication 4, caractérisé en ce qu'il comprend des moyens pour modifier la longueur d'onde dudit flux lumineux monochromatique.

6. Dispositif suivant la revendication 3, caractérisé en ce qu'il comporte des moyens pour coder le flux lumineux d'excitation thermique.

7. Dispositif suivant la revendication 6, caractérisé en ce que les moyens pour coder le flux lumineux d'excitation thermique comportent un interféromètre à transformée de Fourier.

8. Dispositif suivant la revendication 6, caractérisé en ce que les moyens pour coder le flux lumineux d'excitation thermique comportent un interféromètre à modulation sélective.

9. Dispositif suivant l'une quelconque des revendications 2 à 8, caractérisé en ce que ledit pinceau de lumière est sensiblement cylindrique et en ce que les moyens détecteurs comprennent un étalon Fabry-Perot (21) placé obliquement par rapport audit pinceau de lumière et suivi par un capteur (22).

10. Dispositif suivant l'une quelconque des revendications 2 à 8, caractérisé en ce que le pinceau de lumière est un pinceau convergent focalisé à proximité immédiate de ladite surface de l'échantillon.

11. Dispositif suivant la revendication 10, caractérisé en ce que les moyens détecteurs comprennent une lame interceptant partiellement ledit pinceau et un capteur (22) placé derrière la lame.

12. Dispositif suivant l'une quelconque des revendications 3 à 8, caractérisé en ce qu'il comporte des moyens (16) pour séparer le flux lumineux monochromatique en deux faisceaux dont un est appliqué à l'échantillon (19) et l'autre à un étalon, et en ce que les moyens détecteurs associés, d'une part, à l'échantillon, d'autre part, à l'étalon, fournissent des signaux de sortie aux deux entrées d'un circuit diviseur.

13. Dispositif suivant la revendication 2 de mesure de l'échauffement périodique de l'échantillon parcouru par un courant électrique alternatif, caractérisé en ce que lesdits moyens comprennent un des guides de lumière, tels que des fibres optiques, pour amener le faisceau de lumière depuis une source, et pour le recueillir.

14. Application du procédé suivant la revendication 1 à la mesure du coefficient d'absorption de lumière de l'échantillon, caractérisée en ce qu'on irradie l'échantillon placé dans un gaz par un flux lumineux d'excitation thermique dirigé vers la surface de l'échantillon et dont l'amplitude varie dans le temps.

15. Application suivant la revendication 14, caractérisée en ce qu'on fait varier la longueur d'onde du flux lumineux d'excitation thermique, constitué de lumière monochromatique, et en ce qu'on mesure les variations correspondantes de la déviation du pinceau de façon à déterminer le spectre d'absorption de la lumière par l'échantillon.

## Claims

1. Method for measuring thermal transfers of a heat quantity between a specimen of substance in condensed phase and an ambient gas, comprising detecting the thermal transfers by measuring the extent of angular deflection of a pencil of light which passes through an area located clause to the surface of said specimen which is subjected to a time variable thermal energization, characterized in that saidlight pencil is directed parallel to a substantially rectilinear part of the surface of the specimen.

2. Device for carrying out the method for measuring thermal transfers between a specimen of substance in condensed phase and an ambient gas according to claim 1, comprising means for subjecting the specimen to a time variable thermal energization, characterized in that it comprises a support for said specimen (18), means for directing a pencil of light (11) parallel to a rectilinear surface of the specimen and in immediate proximity to said surface, and means (21, 22) for detecting the extent of the angular deflection of the light pencil.

3. Device according to claim 2 for measuring the absorption coefficient of the specimen, characterized in that said device comprises means (12-15) for forming a time variable energizing light flux directed towards the surface of the specimen for producing said thermal energization.

4. Device according to claim 3, characterized in that it comprises means for rendering the thermal energization light flux monochromatic.

5. Device according to claim 4, characterized in that it comprises means for modifying the wave-lenght of said monochromatic light flux.

6. Device according to claim 3, characterized in that it includes means for encoding the thermal energization flux.

7. Device according to claim 6, characterized in that the means for encoding the thermal energization light flux include a Fourier transform interferometer.

8. Device according to claim 6, characterized in that the means for encoding the thermal energization light flux include a selective modulation interferometer.

9. Device according to any one of claims 2-8, characterized in that said pencil of light is substantially cylindrical and the detector means comprise a Fabry-Perot standard (21) positioned obliquely with respect to said pencil of light and followed by a sensor (22).

10. Device according to any one of claims 2-8, characterized in that the pencil of light is convergent pencil focused in the immediate proximity of said surface of the specimen.

11. Device according to claim 10, characterized in that the detector means comprise a place partly intercepting said pencil and a sensor (22) positioned behind the plate.

12. Device according to any one of claims 3-8, characterized in that it comprises means (16) for separating the monochromatic light flux into two beams one of which (19) is applied to the specimen and the other to a standard, and detector means associated with the specimen, and with the standard respectively, provide output signals to the two inputs of a divider circuit.

13. Device according to claim 2 for measuring the periodic heating of the specimen traversed by an alternating electric current, characterized in that said means comprise light guides such as optical fibers for leading the pencil of light from a source and collecting it.

14. Application of the method according to claim 1 for measuring the light absorption coefficient of the specimen, characterized in that the specimen placed in the gas is irradiated with a thermal energization light flux directed to the surface of the specimen and the value of which is varied in time.

15. Application according to claim 14, characterized the wave-length of the heat energization light flux, constituted by monochromatic light, is varied with time and the corresponding variations in deviation of the pencil are measured to determine the light absorption spectrum of the specimen.

## Ansprüche

1. Verfahren zum Messen der zwischen einem Prüfling mit kondensierter Phase und einem Umgebungsfluid übertragenen Wärmemenge, bei dem die übertragene Wärmemenge durch Messen des Ablenkungswinkels eines Lichtstrahlenbündels, das eine Zone durchquert, die in der Nähe der Oberfläche des Prüflings liegt, der einer in Abhängigkeit von der Zeit veränderlichen thermischen Erregung ausgesetzt wird, festgestellt wird, dadurch gekennzeichnet, daß das Lichtstrahlenbündel parallel zu einem weitgehend geradlinigen Teil der Oberfläche des Prüflings geleitet wird und daß das Fluid ein Gas ist.

2. Vorrichtung zur Durchführung des Verfahrens zum Messen der zwischen einem Prüfling mit kondensierter Phase und einem diesen umgebenden Gas übertragenen Wärmemenge nach Anspruch 1, mit Mitteln, durch die der Prüfling einer in Abhängigkeit von der Zeit veränderlichen thermischen Erregung unterzogen wird, dadurch gekennzeichnet, daß sie aufweist: Einen Prüflingträger (18), ein Lichtstrahlenbündel (11) parallel zu einer geradlinigen Oberfläche des Prüflings und in unmittelbarer Nähe dieser Oberfläche führende Mittel und Mittel (21, 22) zum Feststellen der Amplitude des Ablenkungswinkels des Lichtstrahlenbündels.

3. Vorrichtung nach Anspruch 2 zum Messen des Lichtabsorptionskoeffizienten des Prüflings, dadurch gekennzeichnet, daß sie Mittel (12-15) zur Bildung eines Erregungslichtstroms aufweist, der in Abhängigkeit von der Zeit veränderlich ist und auf die Oberlfäche des Prüflings gerichtet wird, um dort die thermische Erregung zu bewirken.

4. Vorrichtung nach Anspruch 3, dadurch gekennzeichnet, daß sie den die thermische Erregung bewirkenden Lichtstrom monochromatisch machende Mittel aufweist.

5. Vorrichtung nach Anspruch 4, dadurch gekennzeichnet, daß sie Mittel zum Ändern der Wellenlänge des monochromatischen Lichtstroms aufweist.

6. Vorrichtung nach Anspruch 3, dadurch gekennzeichnet, daß sie Mittel zum Kodieren des die thermische Erregung bewirkenden Lichtstroms aufweist.

7. Vorrichtung nach Anspruch 6, dadurch gekennzeichnet, daß die Mittel zum Kodieren des die thermische Erregung bewirkenden Lichtstroms ein Interferometer für die Fourier-Transformierte aufweisen.

8. Vorrichtung nach Anspruch 6, dadurch gekennzeichnet, daß die Mittel zum Kodieren des die thermische Erregung bewirkenden Lichtstroms ein Interferometer für eine selektive Modulation aufweisen.

9. Vorrichtung nach einem der Ansprüche 2 bis 8, dadurch gekennzeichnet, daß das Lichtstrahlenbündel weitgehend zylindrisch ist und daß die Feststellmittel ein Fabry-Perot-Vergleichsnormal (21) aufweisen, das schräg zum Lichtstrahlenbündel angeordnet ist und dem ein Meßfühler (22) folgt.

10. Vorrichtung nach einem der Ansprüche 2 bis 8, dadurch gekennzeichnet, daß das Lichtstrahlenbündel ein konvergierendes Strahlenbündel ist, das in unmittelbarer Nähe der Oberfläche des Prüflings zusammenläuft.

11. Vorrichtung nach Anspruch 10, dadurch gekennzeichnet, daß die Feststellmittel eine das Lichtstrahlenbündel teilweise unterbrechende Platte und einen hinter der Platte angeordneten Meßfühler (22) aufweisen.

12. Vorrichtung nach einem der Ansprüche 3 bis 8, dadurch gekennzeichnet, daß sie Mittel (16) zum Trennen des monochromatischen Lichtstroms in zwei Strahlen aufweist, von denen der eine auf den Prüfling (19) und der andere auf ein Vergleichsnormal gerichtet ist, und daß die einerseits dem Prüfling und andererseits dem Vergleichsnormal zugeordneten Feststellmittel zwei Eingängen einer Dividierschaltung Ausgangssignale zuführen.

13. Vorrichtung nach Anspruch 2 zum Messen der periodischen Erwärmung des von einem elektrischen Wechselstrom durchflossenen Prüflings, dadurch gekennzeichnet, daß die erwähnten Mittel Lichtleiter, wie optische Fasern, aufweisen, um den Lichtstrahl aus einer Quelle zuzuführen und wieder aufzufangen.

14. Anwendung des Verfahrens nach Anspruch 1 zum Messen des Lichtabsorptionskoeffizienten des Prüflings, dadurch gekennzeichnet, daß der in einem Gas angeordnete Prüfling zur thermischen Erregung mit einem auf seine Oberfläche gerichteten Lichtstrom beleuchtet wird, dessen Amplitude sich in Abhängigkeit von der Zeit ändert.

15. Anwendung nach Anspruch 14, dadurch gekennzeichnet, daß die Wellenlänge des der thermischen Erregung dienenden Lichtstroms aus monochromatischem Licht geändert wird und daß die entsprechenden Änderungen der Ablenkung des Lichtstrahlenbündels zur Bestimmung des Spektrums der Absorption des Lichtes durch den Prüfling gemessen werden.

Fig.1.

Fig.3.

Fig.2.

Fig.4.

Fig.5.

32

31 (Cs₃ Cr₂ Cl₉)

30 (Nd Mo O₄)

λ(Å)

4000    6000    8000

0 020 238

# Fig.6.

# Fig.7.